# FASCICULE DE BREVET EUROPEEN

(11) **EP 1 015 223 B1**
(45) Date de publication et mention de la délivrance du brevet: **04.09.2002**
(21) Numéro de dépôt: 98901918.7
(22) Date de dépôt: 16.02.1998
(51) Int. Cl.: B29C 49/78, B29C 49/28, G05B 19/042

(54) **PROCEDE ET DISPOSITIF DE MOULAGE PAR SOUFFLAGE**
VERFAHREN UND VORRICHTUNG ZUM BLASFORMEN
METHOD AND DEVICE FOR BLOW MOULDING

(30) Priorité: 25.02.1997 FR 9702696
(43) Date de publication de la demande: 05.07.2000
(73) Titulaire: MAG-PLASTIC MACHINERY S.A., 1896 Vouvry (CH)
(72) Inventeur: PITTELOUD, Christophe, CH-1992 Les Agettes (CH); GALLAY, Jean, CH-1245 Collonge-Bellerive (CH)
(74) Mandataire: Nithardt, Roland
(86) Numéro de dépôt international: CH9800056
(87) Numéro de publication internationale: WO98038028

(56) Documents cités:
- DE-A- 3 823 671
- GB-A- 2 302 302
- US-A- 4 964 031

## Description

La présente invention concerne un procédé de moulage par soufflage d'objets creux et notamment de récipients à partir de préformes, dans un dispositif comportant au moins deux modules de soufflage, chacun de ces modules comportant des moyens de chauffage des préformes, des moyens de transfert des préformes chauffées d'un ruban convoyeur sur une roue agencée pour déplacer lesdites préformes dans ledit module, une presse de moulage desdits objets creux comprenant au moins un moule de soufflage, et un organe de déchargement des objets creux moulés, ce procédé comportant une étape de chargement des préformes sur des éléments de support équidistants du ruban convoyeur, une étape de chauffage desdites préformes dans les moyens de chauffage, une étape de transfert desdites préformes chauffées sur la roue de déplacement des préformes dans ledit module, une étape d'ouverture d'un moule de la presse de soufflage, une étape d'introduction des préformes dans le moule, une étape de fermeture du moule, une étape de soufflage des objets creux, une étape d'ouverture du moule, une étape de retrait des objets moulés de la presse et une étape d'évacuation desdits objets moulés.

Elle concerne également un dispositif de moulage par soufflage d'objets creux et notamment de récipients à partir de préformes, comportant au moins un poste de chargement des préformes sur des éléments de support équidistants d'un ruban convoyeur, au moins deux modules de soufflage, chaque module comportant des moyens de chauffage des préformes, des moyens permettant le transfert des préformes chauffées du ruban convoyeur sur une roue agencée pour déplacer les préformes dans ledit module, une presse de moulage desdits objets creux comprenant au moins un moule de soufflage et un organe de déchargement des objets moulés.

Les dispositifs de moulage actuels comportent habituellement des lignes de production à plusieurs postes de travail disposés les uns à la suite des autres. Ces dispositifs manquent de souplesse d'utilisation et ne permettent pas d'adapter facilement la quantité d'objets produits aux besoins de l'utilisateur. La flexibilité d'une telle machine est très faible.

Des dispositifs de moulage permettant une plus grande souplesse d'utilisation comportent plusieurs modules de soufflage.

Il est connu, notamment par la publication DE-A-38 23 671, une installation comportant des unités modulaires destinées à réaliser des produits en une matière thermoplastique moulés à partir d'éléments préfaçonnés ramollis. Cette installation comporte trois unités comprenant chacune un moyen de chauffage et des moyens de transfert dans une presse de moulage. Ces unités sont en outre liées à un moyen d'approvisionnement en éléments préfaçonnés ramollis et à une station d'évacuation des produits moulés.

Dans ce type d'installation, chaque unité effectue toutes les opérations simultanément et notamment, le déplacement des préformes, leur introduction dans les presses, leur soufflage et leur évacuation hors des presses.

Toutes ces opérations nécessitent des installations électriques et/ou pneumatiques de grande taille et de grande puissance du fait qu'elles doivent fonctionner pour plusieurs modules simultanément. Ces installations sont donc également relativement coûteuses. D'autre part, comme le coût d'exploitation dépend des pointes d'énergie consommée et pas de l'énergie moyenne, une meilleure répartition de cette consommation d'énergie permettrait de réduire le coût d'exploitation.

La présente invention se propose de pallier ces inconvénients en réalisant un dispositif de moulage par soufflage comportant plusieurs modules et en offrant un procédé de moulage ayant une consommation d'énergie répartie de façon optimale.

Ce but est atteint par le procédé tel que défini en préambule et caractérisé en ce que les étapes de chauffage, de transfert desdites préformes et d'évacuation des objets moulés sont effectuées au même moment pour chaque module, et en ce que les étapes d'ouverture d'un moule, d'introduction des préformes dans ce moule, de fermeture du moule, de soufflage des objets creux, d'ouverture du moule et de retrait des objets moulés sont décalées dans le temps pour chaque module.

Selon un mode de réalisation avantageux du procédé, le décalage dans le temps est différent pour chaque module.

De façon préférentielle, le décalage dans le temps est un multiple entier d'un décalage temporel unitaire.

Le décalage temporel unitaire est avantageusement inférieur ou égal à la durée comprise entre deux étapes de transfert successives, moins la somme des durées du déplacement des préformes dans le module et de l'étape d'introduction dans la presse, divisée par le nombre de modules moins un.

Pour assurer le décalage dans le temps des étapes d'ouverture d'un moule, d'introduction des préformes dans ce moule, de fermeture du moule, de soufflage des objets creux, d'ouverture du moule et de retrait des objets moulés, de préférence, on retarde d'un module à l'autre la mise en route de la roue de déplacement, cette roue étant agencée pour recevoir les préformes après leur chauffage et avant leur soufflage.

Selon un mode de réalisation préféré, l'on effectue simultanément pour chaque module, l'étape de transfert des préformes préalablement chauffées du ruban convoyeur sur la roue de déplacement, ces deux éléments étant momentanément à l'arrêt.

Le but fixé par l'invention est également atteint par le dispositif tel que décrit en préambule et caractérisé en ce que les moyens de chauffage de chaque module sont disposés le long d'un circuit défini partiellement par ledit ruban convoyeur, et en ce que ledit dispositif comprend des moyens pour commander de façon simultanée pour chacun des modules, le chauffage des préformes, le transfert de ces préformes et l'évacuation des objets moulés, et des moyens pour commander de façon décalée dans le temps pour chacun des modules, l'ouverture d'un moule de soufflage, l'introduction des préformes dans ce moule, la fermeture de ce moule et le soufflage des objets creux.

Selon une forme de réalisation préférée, le dispositif comporte un ruban convoyeur sans fin commun formant un circuit fermé unique agencé pour alimenter chaque module.

Ce dispositif comporte de préférence une unité de commande pour enclencher de façon décalée dans le temps la mise en marche de la roue de déplacement dans les différents modules.

Ce dispositif est de préférence également pourvu d'une unité de commande pour enclencher de façon simultanée, pour tous les modules, les moyens permettant le transfert des préformes du ruban convoyeur sur la roue de déplacement de chaque module, ces deux éléments étant momentanément à l'arrêt. Ces deux unités peuvent être constituées d'un même organe.

La présente invention et ses avantages seront mieux compris en référence à un mode de réalisation préféré et aux dessins annexés, dans lesquels :
- la figure 1 illustre un dispositif de moulage selon la présente invention, comportant six modules,
- la figure 2 est une vue de détail d'un module de la figure 1; et
- la figure 3 illustre un diagramme temporel de l'utilisation du dispositif.

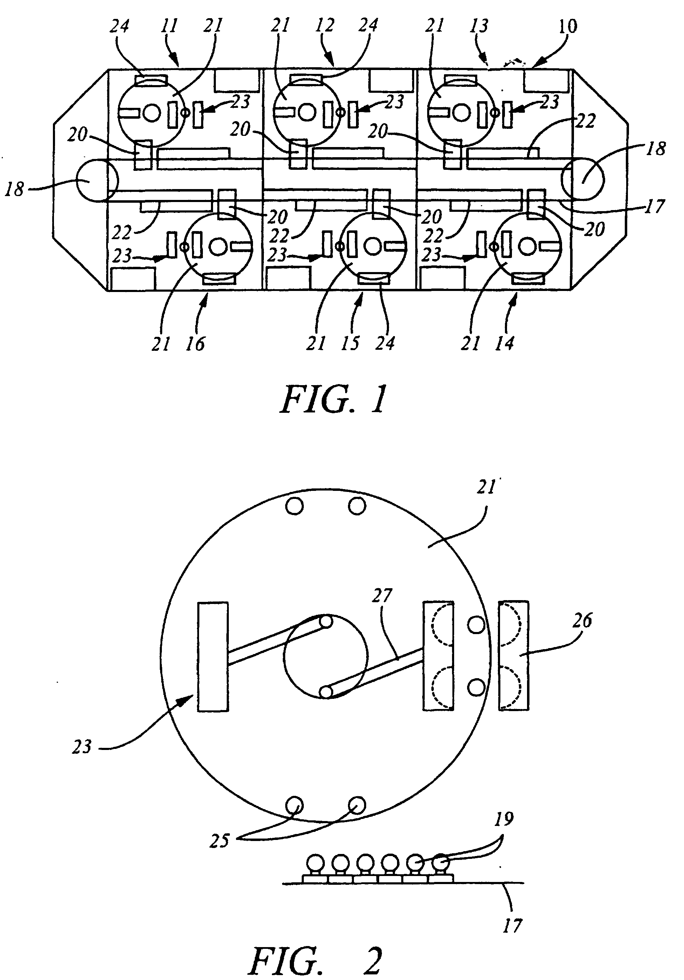

En référence aux figures 1 et 2, le dispositif 10 selon la présente invention comporte six modules 11, 12, 13, 14, 15, 16 de moulage par soufflage reliés par une bande de transport sans fin commune. Cette bande de transport est réalisée sous la forme d'un ruban convoyeur 17 tournant autour de deux cylindres 18 d'axe sensiblement vertical. Le ruban est entraîné de façon intermittente par un moteur électrique (non représenté). Des éléments de support 19 tels que des doigts verticaux sont régulièrement espacés le long du ruban convoyeur 17. Ces doigts sont agencés pour pouvoir maintenir des préformes destinées au moulage par soufflage d'objets creux tels que des bouteilles. Les doigts sont entraînés en rotation de telle manière que les préformes tournent sur elles-mêmes autour de leur axe longitudinal pendant leur transport. A cet effet, les doigts portent chacun un pignon denté qui est en prise avec une chaîne fixe. Le déplacement du ruban entraînant les doigts en prise avec la chaîne fixe provoque la rotation des pignons et par conséquent des doigts de support des préformes.

Chaque module comporte un four 20 de chauffage des préformes, une roue 21 agencée pour déplacer les préformes en différents endroits du module, des moyens 22 de transfert des préformes du ruban convoyeur sur la roue de déplacement 21, une presse 23 pour le moulage des objets et un organe de déchargement 24 des objets creux moulés par soufflage.

Le four 20 est du type conventionnel et permet de chauffer les préformes pendant leur déplacement sur les doigts du ruban convoyeur. Ce four est placé immédiatement en amont des moyens de transfert 22. Ces moyens de transfert comportent deux pinces agencées pour saisir deux préformes chauffées placées sur les doigts du ruban convoyeur et pour les placer sur deux doigts 25 solidaires de la roue de déplacement 21, tout en modifiant l'entraxe des préformes de façon qu'il coïncide avec l'entraxe des doigts de la roue.

Lors du transport des préformes sur le ruban convoyeur, ces préformes sont relativement proches afin de minimiser la place occupée et pour permettre de raccourcir au maximum la longueur du four de chauffage. Sur la roue de déplacement, ces préformes doivent être séparées de façon à permettre le moulage simultané de plusieurs objets tels que des bouteilles, dont les dimensions sont supérieures à celles des préformes.

La presse 23 de chaque module est du type conventionnel et comporte par exemple un moule 26 à deux empreintes. Ce moule est formé de deux demi-moules actionnés par un mécanisme 27 d'ouverture et de fermeture.

L'organe de déchargement 24 des objets creux après le moulage comporte deux pinces agencées pour saisir les bouteilles finies et pour les évacuer.

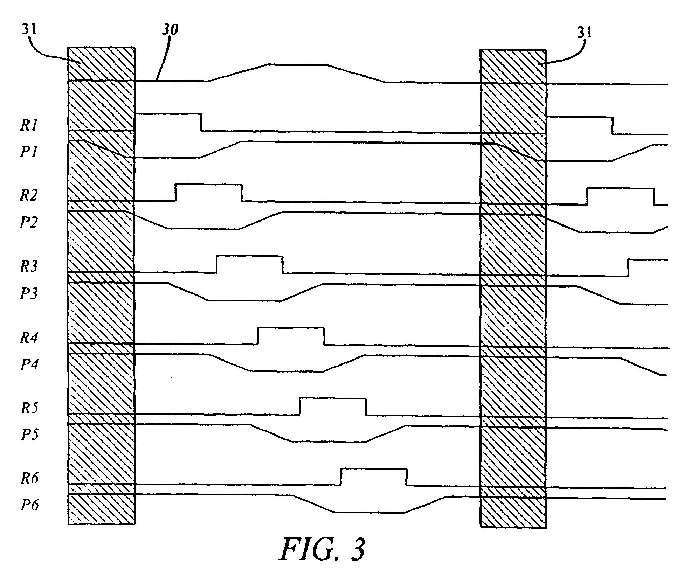

Le procédé selon la présente invention est décrit en référence à la figure 3 illustrant sous la forme d'un diagramme temporel le déplacement du ruban convoyeur, les mouvements de la presse et ceux des roues de déplacement. En particulier, la courbe portant la référence 30 illustre les mouvements du ruban convoyeur, le niveau bas de cette courbe indiquant que ce ruban est immobile et le niveau haut indiquant que ce ruban se déplace.

Les courbes portant les références R1, R2, R3, R4, R5 et R6 illustrent respectivement les mouvements des roues de déplacement 21, le niveau bas de ces courbes indiquant que la roue concernée est immobile et le niveau haut indiquant un déplacement.

Les courbes portant les références P1, P2, P3, P4, P5 et P6 illustrent l'état des moules. Les zones de ces courbes de niveau bas indiquent que le moule concerné est ouvert, alors que les zones de niveau haut indiquent qu'il est fermé.

Les zones hachurées 31 sur cette figure représentent les périodes pendant lesquelles des préformes sont déplacées par les moyens de transfert.

Le procédé selon la présente invention opère de la façon suivante. Une préforme est placée sur chaque doigt 19 du ruban convoyeur 17 au moyen d'un dispositif approprié d'un poste de chargement. Les préformes sont déplacées de façon intermittente au moyen de ce ruban convoyeur de telle façon qu'elles séjournent pendant une durée prédéterminée dans le four 20 de chauffage du module auquel le four est associé.

Lorsque deux préformes arrivent dans une position prédéterminée, à proximité des moyens de transfert 22, le ruban convoyeur s'immobilise. Les moyens de transfert de chaque module prélèvent deux préformes chauffées et les placent sur les doigts 25 de la roue de déplacement 21 en adaptant leur entraxe.

La presse 23 de l'un des modules, appelé premier module 11, est ouverte au moyen du mécanisme 27 d'ouverture et de fermeture du moule. La roue de ce premier module effectue une rotation d'un quart de tour de façon à amener les préformes dans la presse.

Le mécanisme d'ouverture et de fermeture ferme ensuite le moule et les bouteilles sont moulées par soufflage de façon conventionnelle. Le moule est maintenu fermé.

La roue 21 d'un autre module, appelé deuxième module 12 et par exemple immédiatement adjacent au premier module, reste immobile pendant un certain temps, appelé temps d'attente, après la mise en rotation de la roue du premier module. Pendant ce temps d'attente, le moule de ce module est ouvert.

Dès que ce temps d'attente est écoulé, la roue du deuxième module effectue un quart de tour de façon à placer les préformes dans la presse. Le moule est ensuite fermé, puis les bouteilles sont moulées par soufflage comme dans le cas du premier module.

Pour le module suivant, appelé troisième module 13, la roue 21 se met en rotation après une durée équivalente à deux fois le temps d'attente, et ainsi de suite pour chaque module jusqu'à ce que les bouteilles de tous les modules aient été moulées.

Pendant un cycle de soufflage, le ruban convoyeur 17 avance, puis s'immobilise de façon à placer deux préformes en face des moyens de transfert de chaque module.

Les moyens de transfert de chaque module prélèvent alors deux préformes comme cela a été mentionné ci-dessus.

Pendant le transfert des préformes sur les roues de déplacement, le moule du premier module 11 s'ouvre. Lorsque la roue de ce module effectue un quart de tour, des préformes sont placées dans le moule et les objets moulés sont déplacés d'un quart de tour dans une zone de déchargement.

Dans cette zone, l'organe de déchargement 24 prélève les objets moulés et les amène dans une zone d'évacuation pour une utilisation ultérieure. Ces opérations se répètent pour chaque module.

L'ouverture et la fermeture des moules ainsi que le soufflage des objets sont décalés dans le temps pour chaque module. Ce décalage dans le temps de la mise en marche des roues de déplacement est géré par une unité de commande. Cette unité de commande gère également l'enclenchement simultané, pour tous les modules, des moyens de transfert des préformes du ruban convoyeur sur la roue du module. De cette façon, l'énergie nécessaire pour la fermeture des moules et le soufflage des objets est répartie le long d'un cycle de soufflage.

De cette manière, la consommation d'énergie est sensiblement uniforme, il n'y a pas de pointe d'énergie. Ceci permet d'utiliser des installations ayant une dimension plus faible et de réduire les coûts d'exploitation de la machine.

L'utilisation de modules permet d'augmenter la capacité de production de la machine en fonction des besoins de l'utilisateur.

La présente invention n'est pas limitée au mode de réalisation décrit, mais s'étend à toute modification évidente pour l'homme du métier. En particulier, le nombre d'empreintes par moule ou le nombre de modules peut être modifié.

## Revendications

1. Procédé de moulage par soufflage d'objets creux et notamment de récipients à partir de préformes, dans un dispositif comportant au moins deux modules de soufflage, chacun de ces modules comportant des moyens de chauffage (20) des préformes, des moyens (22) de transfert des préformes chauffées d'un ruban convoyeur (17) sur une roue (21) agencée pour déplacer lesdites préformes dans ledit module, une presse de moulage (23) desdits objets creux comprenant au moins un moule de soufflage (26), et un organe de déchargement (24) des objets moulés, ce procédé comportant une étape de chargement des préformes sur des éléments de support équidistants (19) du ruban convoyeur, une étape de chauffage desdites préformes dans les moyens de chauffage, une étape de transfert desdites préformes chauffées sur la roue de déplacement des préformes dans ledit module, une étape d'ouverture d'un moule de la presse de soufflage, une étape d'introduction des préformes dans le moule, une étape de fermeture du moule, une étape de soufflage des objets creux, une étape d'ouverture du moule, une étape de retrait des objets moulés de la presse et une étape d'évacuation desdits objets moulés, **caractérisé en ce que** les étapes de chauffage, de transfert desdites préformes et d'évacuation des objets moulés sont effectuées au même moment pour chaque module (11, 12, 13, 14, 15, 16), et **en ce que** les étapes d'ouverture d'un moule, d'introduction des préformes dans ce moule, de fermeture du moule, de soufflage des objets creux, d'ouverture du moule et de retrait des objets moulés sont décalées dans le temps pour chaque module.

2. Procédé selon la revendication 1, **caractérisé en ce que** le décalage dans le temps est différent pour chaque module.

3. Procédé selon la revendication 2, **caractérisé en ce que** le décalage dans le temps est un multiple entier d'un décalage temporel unitaire.

4. Procédé selon la revendication 3, **caractérisé en ce que** le décalage temporel unitaire est inférieur ou égal à la durée comprise entre deux étapes de transfert successives, moins la somme des durées du déplacement des préformes dans le module et de l'étape d'introduction dans la presse, divisée par le nombre de modules moins un.

5. Procédé selon la revendication 1, **caractérisé en ce que**, pour assurer le décalage dans le temps des étapes d'ouverture d'un moule, d'introduction des préformes dans ce moule, de fermeture du moule, de soufflage des objets creux, d'ouverture du moule et de retrait des objets moulés, on retarde d'un module à l'autre la mise en route de la roue de déplacement, cette roue (21) étant agencée pour recevoir les préformes après leur chauffage et avant leur soufflage.

6. Procédé selon la revendication 1, **caractérisé en ce que** l'on effectue simultanément pour chaque module l'étape de transfert des préformes préalablement chauffées du ruban convoyeur (17) sur la roue (21), ces deux éléments étant momentanément à l'arrêt.

7. Dispositif de moulage par soufflage d'objets creux et notamment de récipients à partir de préformes, pour la mise en oeuvre du procédé de la revendication 1, comportant au moins un poste de chargement des préformes sur des éléments de support équidistants (19) d'un ruban convoyeur (17), au moins deux modules de soufflage (11, 12, 13, 14, 15, 16), chaque module comportant des moyens de chauffage (20) des préformes, des moyens (22) permettant le transfert des préformes chauffées du ruban convoyeur sur une roue (21) agencée pour déplacer les préformes dans ledit module, une presse de moulage (23) desdits objets creux comprenant au moins un moule de soufflage (26) et un organe de déchargement (24) des objets moulés, **caractérisé en ce que** les moyens de chauffage (20) de chaque module sont disposés le long d'un circuit défini partiellement par ledit ruban convoyeur (17), et **en ce que** ledit dispositif comprend des moyens pour commander de façon simultanée pour chacun des modules, le chauffage des préformes, le transfert de ces préformes et l'évacuation des objets moulés, et des moyens pour commander de façon décalée dans le temps pour chacun des modules, l'ouverture d'un moule de soufflage, l'introduction des préformes dans ce moule, la fermeture de ce moule et le soufflage des objets creux.

8. Dispositif selon la revendication 7, **caractérisé en ce que** le ruban convoyeur sans fin (17) forme un circuit fermé unique agencé pour alimenter chaque module.

9. Dispositif selon la revendication 7, **caractérisé en ce qu'**il comporte une unité de commande pour enclencher de façon décalée dans le temps la mise en marche de la roue (21) dans les différents modules.

10. Dispositif selon la revendication 7, **caractérisé en ce qu'**il comporte une unité de commande pour enclencher de façon simultanée, pour tous les modules, les moyens (22) permettant le transfert des préformes du ruban convoyeur (17) sur la roue (21) de chaque module, ces deux éléments, étant momentanément à l'arrêt.

## Patentansprüche

1. Blasform-Gießverfahren für Hohlkörper und insbesondere für Behälter aus Vorformteilen in einer Vorrichtung, die jeweils mindestens zwei Blasformmodule aufweist, wobei jedes der Module Heizmittel (20) für die Vorformteile und Mittel (22) zum Übertragen der erhitzten Vorformteile von einem Förderband (17) über ein Rad (21) aufweist, das so angeordnet ist, daß es die Vorformteile in das Modul verlagert, wobei eine Gießpresse (23) für die Hohlkörper mindestens eine Blas-Gießform (26) und ein Entladungsorgan (24) für die gegossenen Gegenstände aufweist, wobei das Verfahren einen Schritt zum Laden der Vorformteile auf gleich weit von dem Förderband beabstandete Trägerelemente (19), einen Schritt zum Erhitzen der Vorformteile in den Heizmitteln, einen Schritt zum Übertragen der erhitzten Vorformteile über das Rad zur Verlagerung der Vorformteile in das Modul, einen Schritt zum Öffnen einer Gießform der Blasformpresse, einen Schritt zum Einführen der Vorformteile in die Gießform, einen Schritt zum Verschließen der Gießform, einen Schritt zum Blasformen der Hohlkörper, einen Schritt zum Öffnen der Gießform, einen Schritt zum Zurückziehen der Gießformen von der Presse und einen Schritt zum Entleeren der gegossenen Gegenstände umfaßt,
**dadurch gekennzeichnet, daß**
die Schritte zum Erhitzen, zum Übertragen der Vorformteile und zum Entleeren der gegossenen Gegenstände bei jedem Modul (11,12,13,14,15,16) gleichzeitig erfolgen und daß die Schritte zum Öffnen einer Gießform, zum Einführen von Vorformteile in die Gießform, zum Verschließen der Gießform, zum Blasformen von Hohlkörpern, zum Öffnen der Gießform und zum Zurückziehen der gegossenen Gegenstände für jedes Modul zeitversetzt sind.

2. Verfahren nach Anspruch 1,
**dadurch gekennzeichnet, daß**
die Zeitversetzung für jedes Modul unterschiedlich ist.

3. Verfahren nach Anspruch 2,
**dadurch gekennzeichnet, daß**
die Zeitversetzung ein vielfaches Ganzes einer einheitlichen Zeitversetzung ist.

4. Verfahren nach Anspruch 3,
**dadurch gekennzeichnet, daß**
die einheitliche zeitliche Verschiebung kleiner oder gleich der Zeitdauer ist, die zwischen zwei aufeinanderfolgenden Schritten zum Übertragen liegt, minus der Summe der Zeitdauern der Verschiebung der Vorformteile in das Modul und des Schrittes zum Einführen in die Presse, geteilt durch die Anzahl von Modulen minus eins.

5. Verfahren nach Anspruch 1,
**dadurch gekennzeichnet, daß**
zur Sicherstellung der Zeitversetzung der Schritte zum Öffnen einer Gießform, zum Einführen der Vorformteile in die Gießform, zum Verschließen der Gießform, zum Blasformen von Hohlkörpern, zum Öffnen der Gießform und zum Zurückziehen der gegossenen Gegenstände von einem Modul zum nächsten die Inbetriebsetzung des Verlagerungsrades verzögert wird, wobei das Rad (21) so angeordnet ist, daß es die Vorformteile nach ihrem Erhitzen und vor ihrem Blasformen aufnimmt.

6. Verfahren nach Anspruch 1,
**dadurch gekennzeichnet, daß**
für jedes Modul der Schritt zum Übertragen der zuvor erhitzten Gießformen des Förderbandes (17) auf dem Rad gleichzeitig ausgeführt wird, wobei sich die zwei Elemente momentan im Stillstand befinden.

7. Blasform-Gießvorrichtung für Hohlkörper und insbesondere für Behälter aus Vorformteilen zur Anwendung des Verfahrens von Anspruch 1, die eine Station zum Laden der Vorformteile auf die gleich weit von einem Förderband (17) beabstandeten Trägerelemente (19) und mindestens zwei Blasformmodule (11,12,13,14,15,16) aufweist, wobei jedes Modul Heizmittel (20) für die Vorformteile, Mittel (22), die das Übertragen der erhitzten Vorformteile von dem Förderband über ein Rad (21) ermöglichen, das so angeordnet ist, daß es die Vorformteile in das Modul verlagert, und eine Gießpresse (23) für die Hohlkörper mit mindestens einem Blasformmodul (26) und einem Entladungsorgan (24) für die gegossenen Gegenstände aufweist,
**dadurch gekennzeichnet, daß**
die Heizmittel (20) eines jeden Moduls entlang eines Kreislaufes angeordnet sind, der teilweise durch das Förderband (17) definiert ist, und daß die Vorrichtung Mittel zur gleichzeitigen Steuerung jedes der Module, der Heizung für die Vorformteile, der Übertragung der Vorformteile und der Entleerung der gegossenen Gegenstände und Mittel zur zeitversetzten Steuerung eines jeden der Module, zum Öffnen einer Blas-Gießform, zum Einführen der Vorformteile in die Gießform, zum Verschließen der Gießform und zum Blasformen der Hohlkörper aufweist.

8. Vorrichtung nach Anspruch 7,
**dadurch gekennzeichnet, daß**
das Endlosförderband (17) einen einzigen geschlossenen Kreislauf bildet, der zur Versorgung eines jeden Moduls angeordnet ist.

9. Vorrichtung nach Anspruch 7,
**dadurch gekennzeichnet, daß**
sie eine Steuerungseinheit zum Auslösen der zeitversetzten Inbetriebsetzung des Rades (21) in den verschiedenen Modulen aufweist.

10. Vorrichtung nach Anspruch 7,
**dadurch gekennzeichnet, daß**
sie eine Steuerungseinheit zum gleichzeitigen Auslösen aller Module, der Mittel (22), die die Übertragung der Vorformteile von dem Förderband (17) über das Rad von jedem Modul ermöglichen, aufweist, wobei sich die zwei Elemente momentan im Stillstand befinden.

## Claims

1. Blow moulding process for hollow objects and in particular receptacles made from preforms, in a device comprising at least two blowing modules, each of these modules comprising heating means (20) of the preforms, means (22) to transfer heated preforms from a conveyor belt (17) on a wheel (21) designed to move the said preforms into the said module, a moulding press (23) of said hollow objects comprising at least one blowing mould (26) and an unloading member (24) of the moulded objects, this process comprising a loading stage of the preforms on equidistant supports (19) of the conveyor belt, a heating stage of the said preforms into the heating means, a stage of transfer of the said heated preforms on the moving wheel of the preforms into said module, an opening stage of a mould of the blowing press, an introducing stage of the preforms into the mould, a closing stage of the mould, a blowing stage of the hollow objects, an opening stage of the mould, a withdrawal stage of the moulded objects from the press and a removing stage of the said moulded objects, **characterised in that** the heating and transfer stages of the said preforms and the removal stage of moulded objects are made at the same time for each module (11, 12, 13, 14, 15, 16), and **in that** the stages for opening a mould, introducing preforms into this mould, closing the mould, blowing hollow objects, opening the mould and withdrawing the moulded objects are staggered over a period of time for each module.

2. Process according to claim 1, **characterised in that** the staggering over a period of time is different for each module.

3. Process according to claim 2, **characterised in that** the staggering over a period of time is an integral multiple of a unit time lag.

4. Process according to claim 3, **characterised in that** the unit time lag is lower or equal to the length of time between two successive transfer stages, less the sum of the lengths of the moving of the preforms into the module and of the introduction stage into the press, divided by the number of modules minus one.

5. Process according to claim 1, **characterised in that** to ensure staggering over a period of time of the stages of opening a mould, introducing the preforms into this mould, closing the mould, blowing the hollow objects, opening the mould and withdrawing the moulded objects, start-up of the moving wheel from one module to another is delayed, this wheel (21) being designed to receive the preforms after their heating and before blowing.

6. Process according to claim 1, **characterised in that** the transfer stage of previously heated preforms is carried out simultaneously for each module from the conveyor belt (17) onto the wheel (21), these two components being momentarily stationary.

7. Blow moulding device for hollow objects and in particular receptacles made from preforms, for the implementation of the process of claim 1, comprising at least one loading unit of the preforms on equidistant supports (19) of a conveyor belt (17), at least two blowing modules (11, 12, 13, 14, 15, 16), each module comprising heating means (20) for preforms, means (22) permitting the transfer of the heated preforms from the conveyor belt onto a wheel (21) designed to move the preforms into the said module, a moulding press (23) for the said hollow objects comprising at least one blowing mould (26) and one unloading member (24) for the moulded objects, **characterised in that** the heating means (20) of each module are arranged alongside a circuit partially defined by the said conveyor belt (17), and **in that** said device comprises means to simultaneously control, for each of the modules, the heating of the preforms, the transfer of these preforms and the removal of the moulded objects, and means to control, staggered over a period of time for each of the modules, the opening of a blowing mould, introduction of preforms into this mould, closing of this mould and blowing of the hollow objects.

8. Device according to claim 7, **characterised in that** the endless conveyor belt (17) forms a single closed circuit designed to supply each module.

9. Device according to claim 7, **characterised in that** it comprises a control unit to engage in a manner staggered over a period of time, the start-up of the wheel (21) in the different modules.

10. Device according to claim 7, **characterised in that** it comprises a control unit to engage simultaneously, for all the modules, means (22) permitting the transfer of the preforms from the conveyor belt (17) onto the wheel (21) of each module, these two components being momentarily stationary.
